# EUROPEAN PATENT SPECIFICATION

(11) **EP 2 145 725 B1**
(45) Date of publication and mention of the grant of the patent: **27.06.2012**
(21) Application number: 08752632.3
(22) Date of filing: 13.05.2008
(51) Int. Cl.: B23Q 1/70, B23Q 1/52

(54) **ANGULAR INDEXING APPARATUS FOR MACHINE TOOL**
WINKEL-TEILVORRICHTUNG FÜR WERKZEUGMASCHINE
APPAREIL D'INDEXAGE ANGULAIRE POUR MACHINE-OUTIL

(30) Priority: 14.05.2007 JP 2007128327
(43) Date of publication of application: 20.01.2010
(73) Proprietor: Tsudakoma Kogyo Kabushiki Kaisha, Kanazawa-shi, Ishikawa-ken 921-8650 (JP)
(72) Inventor: TATSUDA, Yoshinori, Kanazawa-shi Ishikawa-ken 921-8650 (JP)
(74) Representative: Samson & Partner
(86) International application number: PCT/JP2008/058752
(87) International publication number: WO 2008/143054

(56) References cited:
- JP-A- 05 285 757
- JP-A- 05 293 732
- JP-A- 11 099 433
- JP-A- 2006 025 525
- JP-U- 03 062 702
- JP-U- 64 009 033
- US-A- 5 584 621

## Description

### Technical Field

The present invention relates to an angular indexing apparatus for a machine tool, and, more particularly, to an angular indexing apparatus used in, for example, a 5-axis machining apparatus (machining apparatus capable of simultaneous 5-axis control) or a rotating table apparatus.

### Background Art

As an example of an angular indexing apparatus for a machine tool, a series supporting type is known. In this type, a fifth servo motor that indexes an angle is built in the lower portion of a head; a lower head is provided directly below a vertical rotating shaft, which is rotated by the fifth servo motor, so as to be branched facing downward in a U shape; and an oscillating head for mounting a tool is rotatably supported. (Patent Document 1)

As a different example of an angular indexing apparatus for a machine tool, a parallel supporting type is known. In this type, a rotating drive motor that indexes an angle is built in a head supporting member; the lower portion of a vertical head is connected to the lower portion of an oblique drive shaft, which is rotated by the rotating drive motor; and a vertical tool main shaft is rotatably supported in the head. In addition, the angular indexing apparatus is known as using a rotating drive motor including a rotor and a stator, that is, as singly using what is called a DD motor (that is, using one DD motor). (Patent Document 2)

In the machine tool, the characteristics required of the DD motor differ depending upon a processing method or a processing object. In addition, when a torque that is larger than a present torque is required, in order to increase the torque using one DD motor, the outside diameter of the DD motor itself must be increased. When this is done, the outside diameter of a head surrounding the DD motor is also increased, which is not desirable. Ordinarily, the angular indexing apparatus is mounted to a predetermined mounting position of the existing machine tool. If the outside diameter of the head is made larger than a present outside diameter, the angular indexing apparatus cannot be mounted as it is to the existing machine tool, thereby making it necessary to modify the machine tool itself.

In addition, when a change is made to transmit a torque that is larger than a related torque to the rotating shaft, it is desirable that manufacturing (component processing and assembly) of the apparatus be carried out easily and at a low cost in accordance with this change.
[Patent Document 1] Japanese Unexamined Patent Application Publication No. 2006-26835 (paragraph numbers 0010, 0011; Figs. 1 and 3)
[Patent Document 2] Japanese Unexamined Patent Application Publication No. 2-116437 (page 9, lower column; Fig. 16)

### Disclosure of Invention

US 5,584,621 A discloses an angular indexing apparatus according the preamble of independent claim 1.
While the invention is defined in the independent claim, further aspects of the invention are set forth in the dependent claim, the drawings and the following description.

### Problems to be Solved by the Invention

The present invention is created considering the aforementioned circumstances. The present invention aims at providing at a rotating shaft a torque that is larger than a present torque and to make it possible to carry out manufacturing of an apparatus easily and at a low cost without increasing the outside diameter of a component that is built in a motor.

### Means for Solving the Problems

The present invention presupposes the following: an angular indexing apparatus for a machine tool, including a rotating shaft, a housing, a bearing, and driving means, the rotating shaft having a member that is rotationally driven secured to one end thereof, the housing at least surrounding an outer periphery of the rotating shaft for supporting the rotating shaft, the housing being mountable to and removable from the machine tool, the bearing being accommodated between the housing and the rotating shaft, the driving means being provided between the housing and the rotating shaft, the driving means rotationally driving the rotating shaft to index an angular position thereof, wherein, as the driving means, a drive motor, including a motor rotor and a motor stator, is used, the motor rotor and the motor stator being concentrically disposed around the rotating shaft in the housing.

The following solving means is provided. In the solving means, the driving means is such that a plurality of the drive motors are disposed in series so as to be separated from each other in the axial direction of the rotating shaft; and at least one of the housing and the rotating shaft is formed so that portions thereof are connected to each other so as to be capable of being divided from each other in the axial direction of the rotating shaft.

Due to disposing the plurality of the drive motors in series in the axial direction, the angular indexing apparatus itself becomes long in the axial direction of the rotating shaft. That is, the housing and the rotating shaft become long in the axial direction. When such long components are manufactured so as to have integral structures, it is very difficult to process the components, and manufacturing costs are increased. In addition, although such long components cannot be processed unless large machine tools are used, processing precision of such large machine tools are generally less than processing precision of small machine tools. Therefore, in the processing thereof, it tends to be difficult to provide a required precision. Further, when each component is assembled to complete the apparatus, it becomes difficult to assemble such long components, and the assembly takes time and is troublesome to carry out.

However, since at least one of the housing and the rotating shaft is formed so that portions thereof are connected to each other so as to be capable of being divided from each other in the axial direction of the rotating shaft, such problems can be overcome.

Dividing locations of the housing and the rotating shaft are not limited. However, in order to further facilitate the assembly, it is desirable to use the following as solving means thereof. In the solving means, the housing 30 is such that a plurality of housing members are connected to each other so as to be capable of being divided from each other, the housing members being made to correspond to the plurality of the drive motors and individually surrounding outer peripheries of the drive motors; and is such that a plurality of the motor stators of the drive motors are secured to inner sides of the respective housing members. In addition, the rotating shaft is such that a plurality of shaft members are connected to each other so as to be capable of being divided from each other, the shaft members being made to correspond to the plurality of the drive motors and individually disposed at inner peripheries of the drive motors; and is such that a plurality of the motor rotors of the drive motors are secured to outer sides of the respective rotating shafts.

Assembly procedures of the angular indexing apparatus are not limited. For example, a procedure in which, after connecting the shaft members to each other, the drive motors and the housing members are connected to each other may be used. However, in order to facilitate the assembly operation, it is desirable to use a structure in which the drive motors, the housing members, and the shaft members are integrally connected to each other to form units, and in which the units are abutted upon and connected to each other in the axial direction of the rotating shaft.

### Advantages

Since a plurality of the drive motors are disposed in series so as to be separated from each other in the axial direction of the rotating shaft, it is possible to provide a torque that is larger than that of one drive motor. Therefore, compared to a case in which a torque equivalent to that of one drive motor is obtained, the outside diameters of the drive motors can be reduced. As a result, it is possible to reduce the size of the housing, and, thus, to reduce the outside diameter of the entire indexing apparatus. Further, if a plurality of the drive motors having outside diameters equal to those of the drive motors of an existing indexing apparatus are used, the outside diameter of the housing also becomes equal to that of the existing housing, thereby facilitating a mounting operation.

Since the plurality of drive motors are disposed in series in the axial direction, the angular indexing apparatus itself becomes long in the axial direction of the rotating shaft. However, since at least one of the housing and the rotating shaft is formed so that portions thereof are connected to each other so as to be capable of being divided from each other in the axial direction, compared to a case in which both the housing and the rotating shaft have integral structures, manufacturing is facilitated and manufacturing costs are reduced. In addition, high dimensional precision is provided. As a result, manufacturing (assembly) operations of the entire apparatus are facilitated.

Further, when the housing members and the shaft members are provided in correspondence with the respective drive motors, the housing members and the shaft members can be provided in correspondence with the number of drive motors. Therefore, it is possible to easily add drive motors, and to facilitate assembly.

### Brief Description of Drawings

[Fig. 1] Fig. 1 is a sectional view of an embodiment of an angular indexing apparatus for a machine tool.
[Fig. 2] Fig. 2 is a sectional view of another embodiment of an angular indexing apparatus for a machine tool.
[Fig. 3] Fig. 3 is a sectional view of a modification of the angular indexing apparatus for the machine tool.
[Fig. 4] Fig. 4 is an enlarged sectional view of a multiple-row roller bearing.
[Fig. 5] Fig. 5 is a schematic front view of a processing head.
[Fig. 6] Fig. 6 is a perspective view of the entire machine tool.

### Reference Numerals

- 1: machine tool
- 2: head
- 3: column
- 4: cross rail
- 5: saddle
- 6: ram
- 7: table
- 8: processing head
- 9: spindle
- 10: spindle unit
- 11: first support head
- 12: base
- 13: casing
- 14: leg
- 20: second support head
- 30: housing
- 31: first housing member
- 31a: body
- 31b: first housing sleeve
- 31c: outwardly facing window
- 32: second housing member
- 32a: body
- 32b: second housing sleeve
- 32c: engagement stopping sleeve
- 32d: spacer sleeve
- 32e: outwardly facing window
- c1: connector
- c11: cable
- H1: cable wiring hole
- c2: connector
- c21: cable
- H2: cable wiring hole
- c3: connector
- c31: cable
- H3: cable wiring hole
- 40: rotating shaft
- 40a: rotation detection shaft member
- 41: first shaft member
- 42: second shaft member
- 42a: body
- 42b: recessed portion
- 42c: second shaft sleeve
- 42d: connecting member
- 42e: flange member
- 43: third shaft member
- 50: clamping mechanism
- 51: clamp sleeve
- 51a: thick-walled portion
- 51b: thin-walled portion
- 52: pressure-receiving member
- 53: pressure chamber
- 54: fluid path
- 54a: exit portion
- R: rotary joint
- R1: distributor
- R1a: flange portion
- R2: shaft
- R2a: first shaft sleeve
- R0: annular groove
- R11: fluid path
- R21: fluid path
- B1: bearing
- B2: bearing
- B2a: inner ring
- B2b: outer ring
- B2c: circular cylindrical roller
- M1: drive motor
- M1a: motor rotor
- M1b: motor stator
- M1c: stator sleeve
- M2: drive motor
- M2a: motor rotor
- M2b: motor stator
- M2c: stator sleeve
- 60: rotation detector
- 61: detector stator
- 62: detector rotor

### Best Modes for Carrying Out the Invention

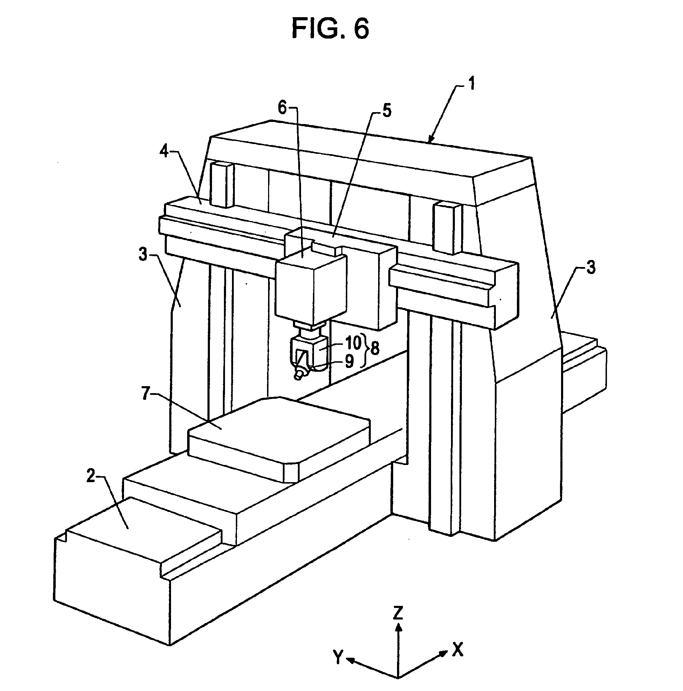

In an example of a machine tool 1 to which the present invention is applied, as shown in Fig. 6, a gate-type machine tool (machining center) is used as a composite machining apparatus, such as a 5-axis machining apparatus or a multi-axis machining apparatus. The illustrated machine tool 1 is a machining apparatus capable of simultaneous 5-axis control; and includes, as a machine tool body, left and right columns 3 and 3, a cross rail 4, a saddle 5, a ram 6, and a table 7. The left and right columns 3 and 3 stand from respective sides of a head 2. The cross rail 4 is disposed at the columns 3 and 3 and moves vertically (in the direction of a Z axis) along one of front and back surfaces of each column 3. The saddle 5 moves horizontally towards the left and right (in the direction of a Y axis) along the front surface of the cross rail 4 (that is, along a side that is the same as that where the cross rail 4 is provided with respect to the columns 3). The ram 6 moves along the front surface of the saddle 5 in the direction of the Z axis. The table 7 moves along the upper surface of the head 2 in a front-back direction. In addition, a processing head 8 is removably mounted to the ram 6 of the machine tool body. A spindle unit 10 including a spindle 9 to which a tool is mounted is provided as one component of the processing head 8.

In such a machine tool 1, during processing of a workpiece, by numerical-value control based on a preset program, the table 7, the cross rail 4, the saddle 5, and the ram 6 are moved, and the processing head 8 indexes the angular position (rotation position) of the spindle unit 10. By this, in the gate-type machine tool, it is possible to abut the tool upon each processing surface of the workpiece at a suitable angle and to process the workpiece, and to, for example, cut and process the workpiece having a complicated shape.

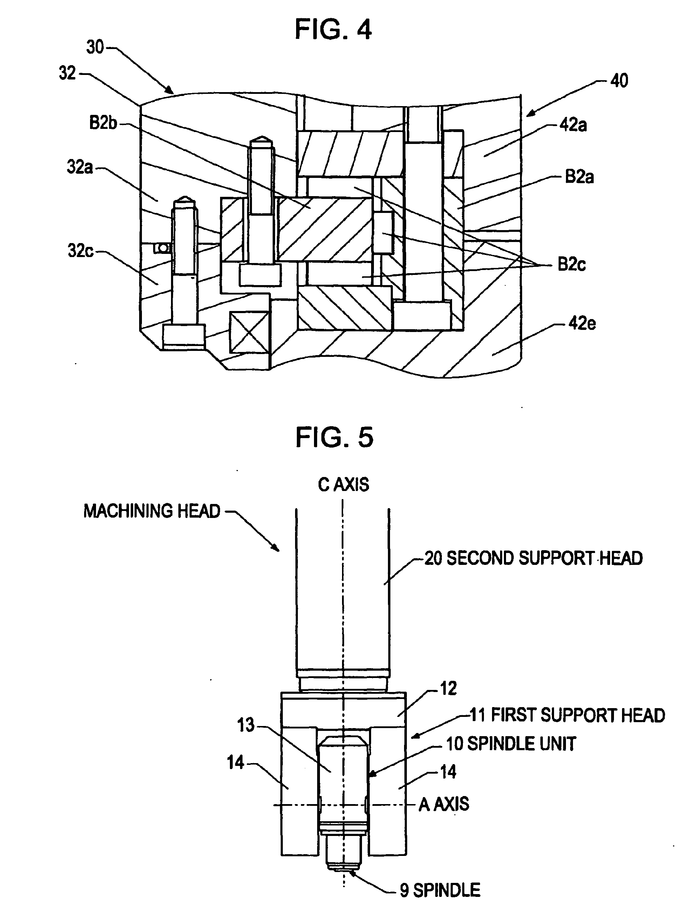

As shown in Fig. 5, the processing head 8 includes the spindle unit 10, a first support head 11, and a second support head 20. The spindle unit 20 is provided with the spindle 9 to which a tool is mounted. The first support head 11 rotatably supports the spindle unit 10 in a state allowing angular adjustment. The second support head 20 rotatably supports the first support head 11 at a side opposite to the spindle unit 10. In addition, the first support head 11 (a base 12 of the first support head 11) corresponds to what is called a member that is rotationally driven in the invention of the application, and the second support head 20 corresponds to what is called the angular indexing apparatus in the invention of the application.

The first support head 11 rotatably supports the spindle unit 10 with an A axis as center, and, with a built-in motor, causes the spindle unit 10 to rotate around the axis (hereunder referred to as "A axis") that is orthogonal to an axial direction corresponding to a vertical direction (hereunder referred to as "C-axis direction") to index the angular position thereof. The C axis is parallel to a Z axis of the machine tool 1.

The first support head 11 rotatably supports the spindle unit 10 with an A axis as center, and, with a built-in motor, causes the spindle unit 10 to rotate around the axis (hereunder referred to as "A axis") that is orthogonal to an axial direction corresponding to a vertical direction (hereunder referred to as "C-axis direction") to index the angular position thereof. The C axis is parallel to a Z axis of the machine tool 1.

The first support head 11 has the shape of a fork in which a pair of legs 14 and 14 are mounted to the base 12 (portion at the side of the second support head 20) so as to be spaced apart (separated) from each other. The spindle unit 10 is supported between the pair of legs 14 and 14. More specifically, a pair of support shafts (not shown), rotatably supported in the interiors of the respective legs 14 and disposed so that their rotational axes match the A axis, are mounted to the respective side surfaces of the spindle unit 10. By the support shafts, the spindle unit 10 is rotatably supported between the pair of legs 14 and 14. In addition, by rotationally driving the support shafts by a motor built in the leg 14, the spindle unit 10 is rotated around the A axis as center, to index its angular position.

The second support head 20 supports the first support head 11 so that the first support head 11 rotates around the C axis as center, rotates the first support head 11 by a built-in driving means, and indexes its angular position, to index the angular position of the spindle unit 10. The second support head 20 is mounted to the ram 6 of the machine tool 1, and has the first support head 11 mounted to one end thereof. In the description below, each part of the second support head 20 basically has a cylindrical shape or an annular shape with the C axis as the axis. In addition, the term "connect" means that fastening and securing with, for example, screws or bolts.

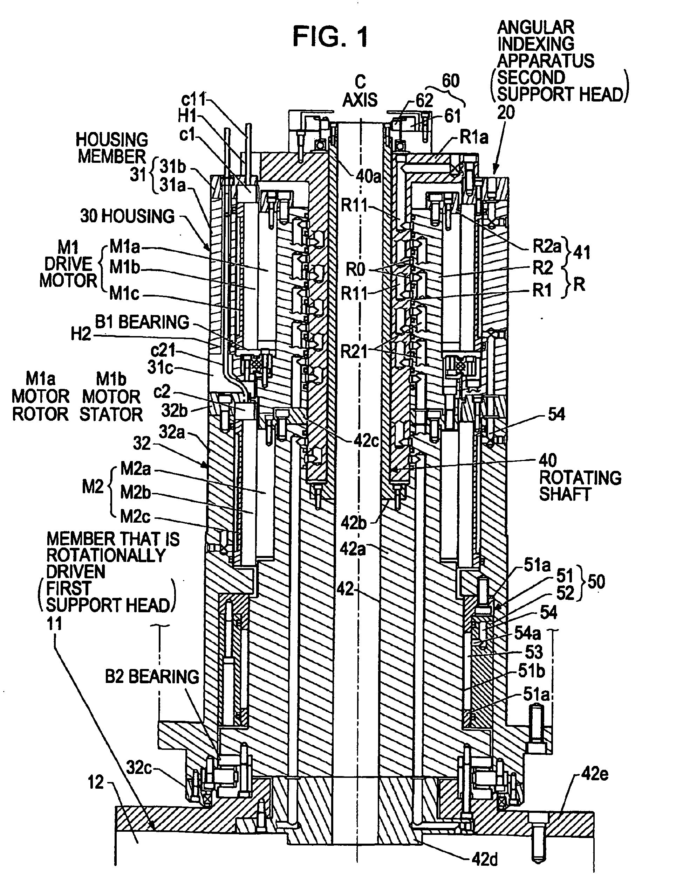

As shown in Fig. 1, the second support head 20 includes a housing 30, a rotating shaft 40, bearings B1 and B2, driving means M1 and M2, and a clamping mechanism 50 (which holds the rotating shaft 40 so as to be incapable of rotating). The rotating shaft 40 is rotatably supported in the interior of the housing 30. The bearings B1 and B2 are interposed between the housing 30 and the rotating shaft 40. The driving means M1 and M2 are similarly interposed between the housing 30 and the rotating shaft 40. The clamping mechanism 50 is similarly interposed between the housing 30 and the rotating shaft 40. The driving means M1 and M2 and the bearings B1 and B2 are plural in number, and are disposed in series so as to be spaced apart from each other in the C axis direction. In the embodiment, a cross roller bearing is used for the bearing B1 at a side (upper side) opposite to the member that is rotationally driven, and a multiple-row roller bearing capable of supporting an axial load and a radial load is used for the bearing B2 at the side of the member that is rotationally driven (lower side).

The driving means M1 and M2 rotationally drive the rotating shaft 40 with respect to the housing 30 secured to the machine tool 1, and driving motors M1 and M2 are used therefor. Each of the driving motors M1 and M2 is a type that is operated by directly connecting it to a load without using a decelerator such as a gear (this type is popularly called a direct-drive motor/DD motor). The drive motors M1 and M2 include motor stators M1b and M2b, motor rotors M1a and M2a, and stator sleeves M1c and M2c, respectively, all of which are concentrically disposed. The motor stators M1b and M2b are formed by winding coils around fixed iron cores. In the motor rotors M1a and M2a, a plurality of opposing magnets disposed close to the inner peripheral surfaces of the respective motor stators M1b and M2b are disposed in a peripheral direction. The stator sleeves M1c and M2c hold the motor stators M1b and M2b, respectively.

The housing 30 primarily includes housing members 31 and 32, and a distributor R1 of a rotary joint R. The housing 30 can be divided in the C axis direction, and includes the housing member 31 and the housing member 32 in the figure. Regarding the housing members 31 and 32, the illustrated upper housing member 31 is a first housing member, and the lower housing member 32 is a second housing member. The outside diameter of the distributor R1 is less than the inside diameter of the first housing member 31. The first housing member 31 and the second housing member 32 are connected to each other in the form of a vertically long cylinder. The distributor R1 is concentrically disposed so as to be spaced apart from the inner peripheral side of the first housing member 31. An outer peripheral portion of a flange portion R1a, which projects radially outward from the upper end of the distributor R1, is connected to an upper end portion of the first housing member 31. By this, a space is formed between the first housing member 31 and the distributor R1, a space is formed at the inner peripheral side of the distributor R1, and a space is formed at the inner peripheral side of the second housing member 32 for communication therewith. The rotating shaft 40, the bearings B1 and B2, and the drive motors M1 and M2 are disposed in these spaces.

A body 31a of the first housing member 31 has an L shape in cross section at one side thereof, the L shape being formed by inwardly bending a lower end portion of the body 31a. A first housing sleeve 31b, which projects radially inward towards the distributor R1, is connected to an upper end portion of the body 31a. The cross section at one side of the body 31 has overall a U shape that opens inwardly.

The rotary joint R includes the cylindrical distributor R1 and a cylindrical shaft R2 having different diameters. The distributor R1 and the shaft R2 are rotatably fitted to each other in the form of a double tube. Here, the shaft R2 is fitted to the outer side of the distributor R1. A plurality of fluid paths R11 and R21 are formed at the distributor R1 and the shaft R2, respectively, so that they are positionally shifted from each other in a circumferential direction. Annular grooves R0, which communicate with the fluid paths R11 and R21, are formed in a fitting peripheral surface between the distributor R1 and the shaft R2. By virtue of this structure, even if the distributor R1 and the shaft R2 rotate relative to each other, the state of communication between the fluid paths R11 of the distributor R1 and the fluid paths R21 of the shaft R2 is maintained. The fluid paths R11 of the distributor R1 are formed so as to communicate with the outside at the flange portion R1a, and the flow paths R21 of the shaft R2 are formed so as to communicate with the first support head 11.

A second housing sleeve 32b, which projects radially inward, is connected to an upper end portion of a body 32a of the second housing member 32, and an engagement stopping sleeve 32c, which projects radially inward, is connected to a lower end portion of the body 32a of the second housing member 32. In addition, the second housing member 32 is secured to the first housing member 31 by connecting the second housing sleeve 32b to the lower portion of the first housing member 31.

The rotating shaft 40 primarily includes cylindrical shaft members 41, 42, and 40a, and can be divided in the C-axial direction at locations corresponding to a dividing location of the housing 30. In the figure, the rotating shaft 40 can be divided in two in the C-axis direction. The shaft member 41, disposed in the space between the first housing member 31 and the distributor R1, is a first shaft member. The shaft member 41, disposed in the space at the inner peripheral side of the second housing member 32, is a second shaft member. The shaft member 40a, disposed in the space at the inner peripheral side of the distributor R1, is a rotation detection shaft member. In addition, the rotation detection shaft member 40a and the first shaft member 41, which are disposed at the inner and outer sides of the distributor R1, respectively, are abutted upon and connected to the upper end of the second shaft member 42 with the C axis as center. The first shaft member 41 and the second shaft member 42 can be divided at a location corresponding to the dividing location of the housing 30.

The body of the first shaft member 41 corresponds to the shaft R2 of the rotary joint R. The first shaft member 41 is formed so that the lower portion of the shaft R2 projects radially outward so as to face the lower portion of the first housing member 31, and so that a first shaft sleeve R2a, which projects radially outward, is connected to the upper portion of the shaft R2. In addition, one drive motor M1 and one bearing B1 are disposed in a cylindrical space between the first shaft member 41 and the first housing member 31, and the bearing B1 is disposed beneath the drive motor M1. That is, the upper bearing B1 is disposed between the upper drive motor M1 and the lower drive motor M2.

An outer peripheral portion (outer ring) of the upper bearing B1 (cross roller bearing) is connected to the lower portion of the first housing member 31, and an inner peripheral portion (inner ring) of the upper bearing B1 is connected to the lower portion of the first shaft member 41.

In the upper drive motor M1, the motor stator M1b is secured to the inner peripheral side of the first housing member 31 through the stator sleeve M1c, and the motor rotor M1a is secured to the outer peripheral side of the first shaft member 41. More specifically, the motor stator M1b is concentrically fitted and secured to an inner peripheral surface of the stator sleeve M1c, and the stator sleeve M1c is connected to the lower side of the first housing sleeve 31b to secure the motor stator M1b to the first housing member 31. The motor rotor M1a is fitted to the outer peripheral surface of the first shaft member 41 (the shaft R2 of the rotary joint R), and is connected to the lower surface of the first shaft sleeve R2a, to secure the motor rotor M1a to the first shaft member 41. That is, the first housing member 31 and the first shaft member 41 are provided in correspondence with the upper drive motor M1, the motor stator M1b of the drive motor M1 corresponding to the first housing member 31 is assembled so as to be incapable of rotating relatively, and the motor rotor M1a of the drive motor M1 corresponding to the first shaft member 41 is assembled so as to be incapable of rotating relatively.

A cable c11 is connected to the upper drive motor M1 through a connector c1. The cable c11 is, for example, a current supply cable for a U phase, a V phase, or a W phase for supplying current to a coil built in the motor stator; a ground wire; or a detection wire for detecting abnormality of the drive motor M1. For disposing the connector c1, a space that is locally recessed in a portion of the lower surface of the first housing sleeve 31b is formed. The connector c1 is disposed in the recessed space. A cable wiring hole H1 extending vertically through the first housing sleeve 31b is provided therein for passing the cable c11 therethrough.

In the second shaft member 42, a recessed portion 42b is formed in the center portion of the upper end surface of a body 42a, and the lower portion of the distributor R1 and the lower portion of the rotation detection shaft member 40a are disposed in the recessed portion 42b. The recessed portion 42b has a stepped form in which the inside diameter of the upper portion thereof is larger than that of the lower portion thereof. An outer peripheral surface of the lower portion of the distributor R1 contacts the inner peripheral side of the upper portion of the recessed portion 42b, and an outer peripheral surface of the lower portion of the rotation detection shaft member 40a contacts the inner peripheral side of the lower portion of the recessed portion 42b. The second shaft member 42 is provided with a second shaft sleeve 42c connected to the upper portion of the body 42a thereof and projecting radially outward. The second shaft sleeve 42c is connected to the first shaft member 41 provided on the second shaft sleeve 42c.

The second shaft member 42 includes a flange member 42e, disposed at the lower side of the body 42a, and a connecting member 42d, disposed so as to sandwich the flange member 42e; and is formed so that, along with the flange member 42e, the connecting member 42d is connected to the lower surface of the second shaft member 42. The lower end surface of the connecting member 42d and the upper end surface of the base 12 of the first support head 11 are positioned with respect to each other by fitting a recess and a protrusion to each other.

By projecting the second shaft member 42 and the second housing member 32 inwardly and outwardly at proper locations, three annular spaces are formed between the members 42 and 32 so as to be vertically spaced apart from each other. The lower drive motor M2, the clamping mechanism 50, and the lower bearing B2 are separately disposed in the three spaces, respectively.

The lower drive motor M2 is disposed in the upper space among the three spaces. Similarly to the upper drive motor M1, the lower drive motor M2 includes a motor rotor M2a, a motor stator M2b, and a stator sleeve M2c, which are similarly secured to the second housing member 32 through the second housing sleeve 32b or to the second shaft member 42 through the second shaft sleeve 42c. That is, the second housing member 32 and the second shaft member 42 are provided in correspondence with the lower drive motor M2, the motor stator M2b of the drive motor M2 corresponding to the second housing member 32 is assembled so as to be incapable of rotating relatively, and the motor rotor M2a of the drive motor M2 corresponding to the second shaft member 42 is assembled so as to be incapable of rotating relatively.

A plurality of cables c21 are also connected to the lower drive motor M2 through a connector c2. For disposing the connector c2, a space that is locally recessed is formed in the lower surface of the second housing sleeve 32b. In addition, a cable wiring hole H2 for passing the cables c21 therethrough is formed so as to communicate with the interior of the second housing sleeve 32b, the interior of the first housing member 31, and the interior of the first housing sleeve 31 along the axial direction. Further, an outwardly facing window 31c opening to the cables c21 is formed in the outer periphery of the lower end portion of the first housing member 31. The outwardly facing window 31c is used when passing the cables c21 through the cable wiring hole H2 after connecting the first housing member 31 and the second housing sleeve 32b to each other.

The clamping mechanism 50 is disposed in the middle space among the three spaces. The clamping mechanism 50 includes a clamp sleeve 51, which relatively compresses the rotating shaft 40 so that the rotating shaft 40 is incapable of rotating relatively, and a pressure-receiving member 52, which guides fluid for deforming the clamp sleeve 51. The pressure-receiving member 52 and the clamp sleeve 51 are successively concentrically disposed at the inner peripheral side of the second housing member 32 so as to be connected to each other. The clamp sleeve 51 has a groove at its outer periphery. By the groove, a deformable thin-walled portion 51b is formed between an upper thick-walled portion 51a and a lower thick-walled portion 51a. By the groove and the pressure-receiving member 52, a pressure chamber 53 is formed between the outer side of the thin-walled portion 51b and the pressure-receiving member 52. The clamp sleeve 51 is disposed by disposing the thin-walled portion 51b near the second shaft member 42. Further, a fluid path 54 communicating with the pressure chamber 53 is formed in the interior of the pressure-receiving member 52. An exit portion 54a of the fluid path 54 opens into the pressure chamber 53. The fluid path 54 is formed in the housing members 31 and 32, and communicates with a fluid path (not shown) that communicates with the outside at the housing sleeve 31b. By supplying fluid into the fluid path 54, the thin-walled portion 51b is deformed in a small-diameter direction and the second shaft member 42 is compressed to keep the rotating shaft 40 in a state in which it is incapable of rotating.

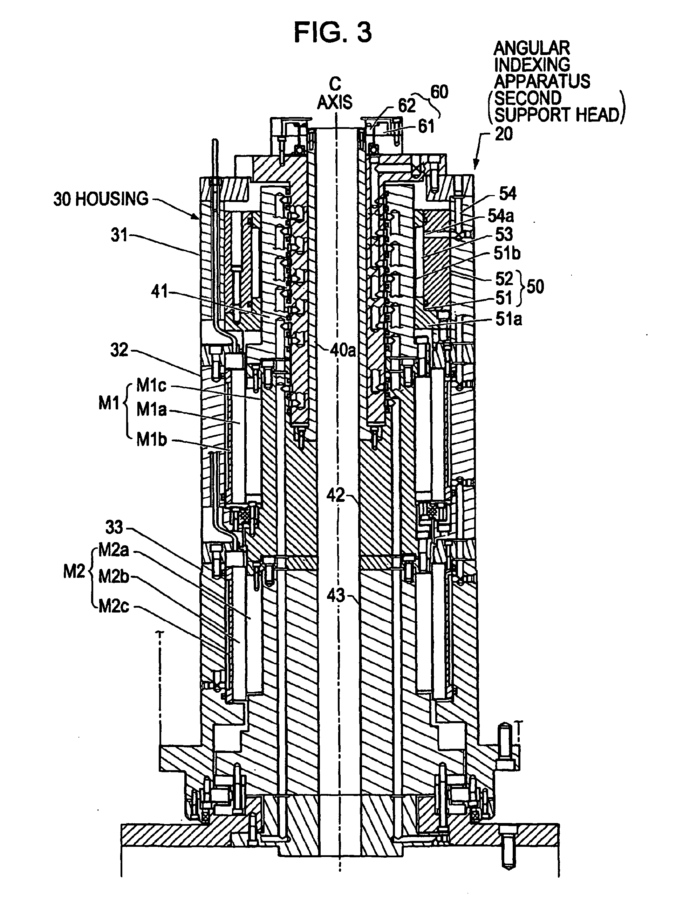

The lower bearing B2 is specifically a triplex-row roller bearing (also called a triplex-row circular cylindrical roller bearing/axial radial roller bearing). More specifically, as shown in Fig. 3, the bearing B2 (triplex roller bearing) includes an inner ring B2a, an outer ring B2b, and a plurality of circular cylindrical rollers B2c interposed between the inner ring B2a and the outer ring B2b. By assembling a plurality of parts, the inner ring B2a is formed so as to have a U shape in cross section at one side and so as to open outwardly. An inner peripheral portion of the outer ring B2b is disposed at an intermediate portion in a height direction of a grooved portion of the inner ring B2a that opens. The inner ring B2a and the outer ring B2b are connected to the rotating shaft 40 and the housing 30, respectively. The circular cylindrical rollers B2c are disposed at the upper side, the lower side, and the inner side of the outer ring B2b, respectively. An axial load is supported by the upper and lower circular cylindrical roller B2c and B2c, and a radial load is supported by the inner circular cylindrical roller B2c. The inner circular cylindrical roller B2c is held by a holding member (not shown).

A rotation detector 60 for detecting an amount of rotation of the rotating shaft 40, that is, an angular position of the first support head 11 is secured to the upper end of the rotating shaft 40 (rotation detection shaft member 40a) and the housing 30 (distributor R1) through, for example, bearings. In the rotation detector 60, a detector stator 61 is secured to the distributor R1, and a detector rotor 62 is secured to the upper end portion of the rotation detection shaft member 40a. A detection signal of the rotation detector 60 is transmitted to a controlling device of the machine tool 1, and is used to control the rotation of the first support head 11.

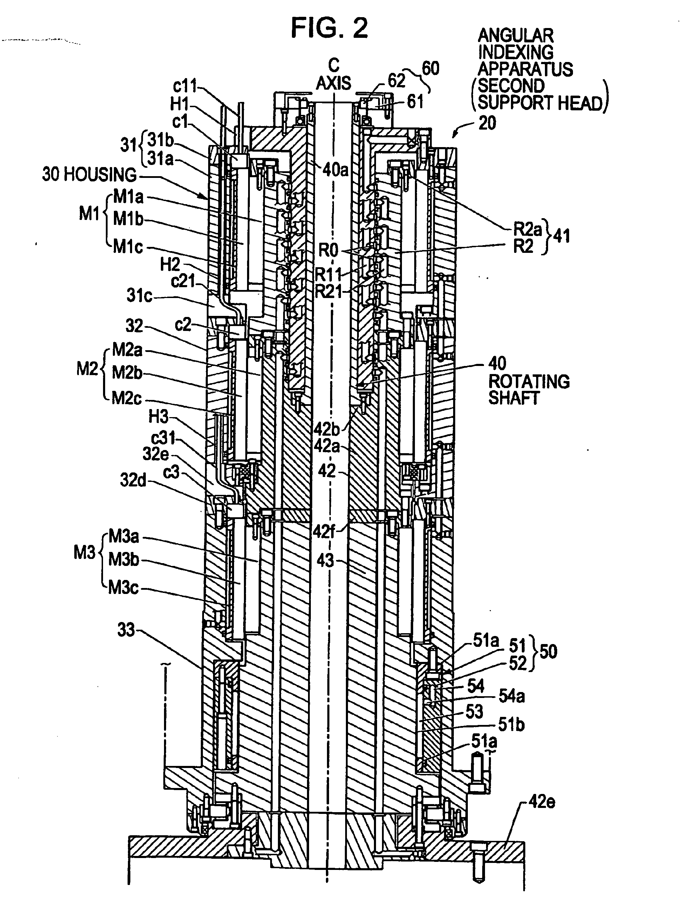

Fig. 2 shows a second support head 20 according to another embodiment. This is an embodiment in which three drive motors, that is, drive motors M1, M2, and M3 are disposed in series between a housing 30 and a rotating shaft 40 so as to be spaced apart from each other in a C-axis direction. Even in this embodiment, the housing 30 and the rotating shaft 40 can be divided in three in the C-axis direction in accordance with the locations where the drive motors M1, M2, and M3 are disposed. That is, in the second support head 20 shown in Fig. 2, three housings members, that is, housing members 31, 32, and 33 or the first housing member 31, the second housing member 32, and third housing member 33 are linearly connected to each other in the C-axis direction. The drive motors M1, M2, and M3, and a first shaft member 41, a second shaft member 42, and a third shaft member 43 are disposed in correspondence with each other at the inner sides of the respective housing members 31, 32, and 33. The first shaft member 41, the second shaft member 42, and the third shaft member 43 are connected to each other in a straight line along the C-axis direction. In other words, the housing 30 and the rotating shaft 40 are formed by assembling to each other the plurality of housing members 31, 32, and 33 and the shaft members 41, 42, and 43, which correspond to the respective drive motors M1, M2, and M3.

The second shaft member 42 and the third shaft member 43 in this case are provided by dividing the second shaft member 42 according to the previous embodiment at the intermediate portion in the axial direction and connecting the divided portions to each other through a spacer shaft member 42f. The second housing member 32 and the third housing member 33 are formed by dividing the second housing member 32 according to the previous embodiment in the axial direction and connecting the divided portions to each other through a spacer sleeve 32d.

In the lowest drive motor M3, the disposition of a motor rotor M3a, a motor stator M3b, and a stator sleeve M3c is similar to that in the other drive motors M1 and M2. A connector c3, a cable c31, and a cable wiring hole H3 for the lowest drive motor M3 are provided similarly to those in the previous embodiment. A wiring hole H2 for the intermediate cable, and the wiring hole H3 for the lowest cable are positionally shifted from each other in a circumferential direction. An outwardly facing window 32e at the lower end portion of the second housing member 32 is provided similarly to an outwardly facing window 31c of the first housing member 31.

Further, the present invention is not limited to the above-described embodiments, so that various modifications can be made without departing from the scope of the claims.

The way in which the housing 30 and the rotating shaft 40 can be divided is not limited to that in which they can be divided in correspondence with the drive motors M1, M2, and M3 as in the embodiments. They may be divided independently of the drive motors M1, M2, and M3. For example, in the structure in which the housing 30 is provided with two drive motors M1 and M2, when the housing 30 is divided in two, both of the drive motors M1 and M2 may be disposed in one of the housing members, the housing member 31 (such as the upper housing), and, for example, the clamping mechanism 50 may be disposed in the other housing member 32. In the structure in which the housing 30 is provided with two drive motors M1 and M2, when the housing 30 is divided in three, only one drive motor M1 may be disposed in the two housing members 31 and 32 that are connected to each other, and, for example, one drive motor M2 and one clamping mechanism 50 may be disposed in the remaining housing member 33. This also applies to the rotating shaft 40.

For example, in the second support head shown in Fig. 2, connection and disconnection of the second housing member 32 to and from the first housing member 31 and the third housing member 33, and connection and disconnection of the second shaft member 42 to and from the first shaft member 41 and the third shaft member 43 can be performed by allowing operation from outside the housing 30. By this, with the housing members 31, 32, and 33 being assembled to the drive motors M1, M2, and M3 and the shaft members 41, 42, and 43, which correspond to the housing members 31, 32, and 33, that is, with the housing members 31, 32, and 33 and the drive motors M1 M2, and M3 and the shaft members 41, 42, and 43, which correspond to the housing members 31, 32, and 33, being formed into units, the housing 30 and the rotating shaft 40 can be divided. According to such a structure, when a unit having the same structure as the unit including the second housing member 32, the drive motor M2, and the second shaft member 42 is separately provided, drive motors can be easily added.

In addition, in the previous embodiments, the shaft R2 of the rotary joint R is used as the first shaft member 41 to which the motor rotor M1a of the drive motor M1 is secured. In addition, the drive motors M1, M2, and M3 are disposed at the outer sides of the first shaft member 41, and the other shaft members 42 and 43 in correspondence therewith. Further, the clamping mechanism 50 is disposed at the outer side of one of the shaft members 42 and 43. However, as shown in Fig. 3, it is possible to separately dispose the clamping mechanism 50 at the outer side of the shaft R2 (first shaft member 41) of the rotary joint R, and to dispose the drive motors M1 and M2 at the outer sides of the second shaft member 42 and the third shaft member 43, respectively.

Although not shown, when the rotating shaft 40 includes the first to third shaft members 41, 42, and 43, and when two drive motors M1 and M2 are provided, it is possible to separately dispose the clamping mechanism 50 at the outer side of the second shaft member 42 and to dispose the drive motors M1 and M2 at the outer side of the first shaft member 41 and the outer side of the third shaft member, respectively.

The use of the angular indexing apparatus according to the present invention is not limited to, for example, the aforementioned 5-axis machining apparatus. For example, the angular indexing apparatus may be applied to a rotating table apparatus that rotationally drives a circular table on which a workpiece is placed and that indexes its angular position. When the angular indexing apparatus is used as a rotating table apparatus, the aforementioned circular table corresponds to what is called the member that is rotationally driven in the present invention.

Further, according to the angular indexing apparatus of the present invention, the number of drive motors that are used is not limited to those mentioned above, so that four or more drive motors may be disposed in series so as to be separated from each other in the axial direction.

## Claims

1. An angular indexing apparatus for a machine tool, including a rotating shaft (40), a housing (30), a bearing (B1, B2), driving means, and a clamping mechanism (50), a member that is rotationally driven (11) being secured to one end of the rotating shaft (40), the housing (30) at least surrounding an outer peripheral surface of the rotating shaft (40) for supporting the rotating shaft (40), the housing (30) being mountable to and removable from the machine tool, the bearing (B1, B2) being provided between the housing (30) and the rotating shaft (40), the driving means being provided between the housing (30) and the rotating shaft (40), the driving means rotationally driving the rotating shaft (40) to index an angular position of the rotating shaft (40), in which, as the driving means, a drive motor (M1, M2, M3), including a motor rotor and a motor stator, is used, the motor rotor and the motor stator being concentrically disposed around the rotating shaft (40) in the housing (30), the clamping mechanism (50) maintaining the angular position indexed by the driving means so that the angular position is unrotatable,
**characterized in that**
the driving means includes a plurality of the drive motors (M1, M2, M3) disposed in series so as to be separated from each other in an axial direction of the rotating shaft (40), and
wherein at least one of the housing (30) and the rotating shaft (40) is such that portions thereof are capable of being divided at locations between the drive motors and/or at locations between the drive motors and the clamping mechanism in the axial direction of the rotating shaft (40).

2. The angular indexing apparatus for the machine tool according to Claim 1, wherein the housing (30) is such that a plurality of housing members (31, 32, 33) are connected to each other so as to be capable of being divided from each other, the housing members (31, 32, 33) being made to correspond to the plurality of the drive motors (M1, M2, M3) and individually surrounding outer peripheries of the drive motors (M1, M2, M3); and is such that a plurality of the motor stators of the drive motors (M1, M2, M3) are secured to inner sides of the respective housing members (31, 32, 33), and
wherein the rotating shaft (40) is such that a plurality of shaft members (41, 42, 43) are connected to each other so as to be capable of being divided from each other, the shaft members (41, 42, 43) being made to correspond to the plurality of the drive motors (M1, M2, M3) and individually disposed at inner peripheries of the drive motors (M1, M2, M3); and is such that a plurality of the motor rotors of the drive motors (M1, M2, M3) are secured to outer sides of the respective rotating shafts (41, 42, 43).

## Patentansprüche

1. Winkel-Teilvorrichtung für eine Werkzeugmaschine, umfassend eine drehende Welle (40), ein Gehäuse (30), ein Lager (B1, B2), ein Antriebsmittel und einen Klemmmechanismus (50), wobei ein Element, das drehend angetrieben ist (11) an einem Ende von der drehenden Welle (40) befestigt ist, wobei das Gehäuse (30) wenigstens eine äußere Umfangsfläche der drehenden Welle (40) zum Lagern der drehenden Welle (40) umgibt, wobei das Gehäuse (30) befestigbar an der Werkzeugmaschine und davon entfernbar ist, wobei das Lager (B1, B2) zwischen dem Gehäuse (30) und der drehenden Welle (40) vorgesehen ist, wobei das Antriebsmittel zwischen dem Gehäuse (30) und der drehenden Welle (40) vorgesehen ist, wobei das Antriebsmittel drehend die drehende Welle (40) antreibt, um eine Winkelposition der drehenden Welle (40) zu teilen, in der, wenn als das Antriebsmittel, ein Antriebsmotor (M1, M2, M3) umfassend einen Motor-Rotor und einen Motor-Stator verwendet wird, der Motor-Rotor und der Motor-Stator konzentrisch um die drehende Welle (40) in dem Gehäuse (30) angeordnet sind, wobei der Klemmmechanismus (50) die Winkelposition aufrechterhält, die über das Antriebsmittel geteilt ist, so dass die Winkelposition nicht drehbar ist,
**dadurch gekennzeichnet, dass**
das Antriebsmittel mehrere von den Antriebsmotoren (M1, M2, M3) umfasst, die in Reihe geschaltet sind, um voneinander in einer axialen Richtung der drehenden Welle (40) getrennt zu werden, und
wobei wenigstens eines von dem Gehäuse (30) und der drehenden Welle (40) derart ausgelegt ist, dass Bereiche davon dazu ausgelegt sind, um an Stellen zwischen den Antriebsmotoren und/oder an Stellen zwischen den Antriebsmotoren und dem Klemmmechanismus in der axialen Richtung der drehenden Welle (40) getrennt zu werden.

2. Winkel-Teilvorrichtung für die Werkzeugmaschine gemäß Anspruch 1, bei der das Gehäuse (30) derart ausgebildet ist, dass mehrere Gehäuse-Elemente (31, 32, 33) derart miteinander verbunden sind, um ausgelegt zu sein, voneinander getrennt zu werden, wobei die Gehäuse-Elemente (31, 32, 33) hergestellt sind, um mit den mehreren der Antriebsmotoren (M1, M2, M3) zu korrespondieren und individuell äußere Umfänge von den Antriebsmotoren (M1, M2, M3) zu umgeben; und derart ausgelegt ist, dass mehrere der Motor-Statoren der Antriebsmotoren (M1, M2, M3) an den inneren Seiten der jeweiligen Gehäuse-Elemente (31, 32, 33) befestigt sind, und
wobei die drehende Welle (40) derart ausgelegt ist, dass mehrere Wellen-Elemente (41, 42, 43) derart miteinander verbunden sind, um im Stande zu sein, voneinander getrennt zu werden, wobei die Wellen-Elemente (41, 42, 43) derart hergestellt sind, um mit den mehreren der Antriebsmotoren (M1, M2, M3) zu korrespondieren und individuell an inneren Umfängen von den Antriebsmotoren (M1, M2, M3) angeordnet sind; und derart ausgelegt ist, dass mehrere der Motor-Rotoren der Antriebsmotoren (M1, M2, M3) an den Außenseiten von den jeweiligen Drehwellen (41, 42, 43) befestigt sind.

## Revendications

1. Appareil d'indexage angulaire destiné à une machine-outil, comprenant un arbre tournant (40), un logement (30), un roulement (B1, B2), des moyens d'entraînement, et un mécanisme de serrage (50), un élément qui est entraîné en rotation (11) étant fixé à une extrémité de l'arbre tournant (40), le logement (30) entourant au moins une surface périphérique extérieure de l'arbre tournant (40) de façon à supporter l'arbre tournant (40), le logement (30) pouvant être monté sur la machine-outil et pouvant être démonté de celle-ci, le roulement (B1, B2) étant disposé entre le logement (30) et l'arbre tournant (40), les moyens d'entraînement étant disposés entre le logement (30) et l'arbre tournant (40), les moyens d'entraînement entraînant en rotation l'arbre tournant (40) de façon à indexer une position angulaire de l'arbre tournant (40), dans lequel, en tant que moyens d'entraînement, un moteur d'entraînement (M1, M2, M3), qui comprend un rotor de moteur et un stator de moteur, est utilisé, le rotor de moteur et le stator de moteur étant disposés de manière concentrique autour de l'arbre tournant (40) dans le logement (30), le mécanisme de serrage (50) maintenant la position angulaire indexée par les moyens d'entraînement de telle sorte que la position angulaire ne puisse pas être tournée ;
**caractérisé en ce que** :
les moyens d'entraînement comprennent une pluralité de moteurs d'entraînement (M1, M2, M3) disposés en série de façon à être séparés les uns des autres dans une direction axiale de l'arbre tournant (40) ; et
dans lequel l'un au moins du logement (30) et de l'arbre tournant (40) est tel que des parties de celui-ci peuvent être divisées au niveau d'emplacements qui se situent entre les moteurs d'entraînement et/ou au niveau d'emplacements qui se situent entre les moteurs d'entraînement et le mécanisme de serrage dans la direction axiale de l'arbre tournant (40).

2. Appareil d'indexage angulaire destiné à une machine-outil selon la revendication 1, dans lequel le logement (30) est tel qu'une pluralité d'éléments de logement (31, 32, 33) sont connectés les uns aux autres de façon à pouvoir être séparés les uns des autres, les éléments de logement (31, 32, 33) étant réalisés de façon à correspondre à la pluralité de moteurs d'entraînement (M1, M2, M3) et entourant de manière individuelle les périphéries extérieures des moteurs d'entraînement (M1, M2, M3) ; et il est tel qu'une pluralité de stators de moteur des moteurs d'entraînement (M1, M2, M3) sont fixés sur les côtés intérieurs des éléments de logement respectifs (31, 32, 33) ; et
dans lequel l'arbre tournant (40) est tel qu'une pluralité d'éléments d'arbre (41, 42, 43) sont connectés les uns aux autres de façon à pouvoir être séparés les uns des autres , les éléments d'arbre (41, 42, 43) étant réalisés de façon à correspondre à la pluralité de moteurs d'entraînement (M1, M2, M3) et étant disposés de manière individuelle au niveau des périphéries intérieures des moteurs d'entraînement (M1, M2, M3) ; et il est tel qu'une pluralité de rotors de moteur des moteurs d'entraînement (M1, M2, M3) sont fixés sur les côtés extérieurs des arbres tournants respectifs (41, 42, 43).
